# EUROPÄISCHE PATENTSCHRIFT

(11) **EP 0 769 511 B1**
(45) Veröffentlichungstag und Bekanntmachung des Hinweises auf die Patenterteilung: **24.07.2002**
(21) Anmeldenummer: 96114065.4
(22) Anmeldetag: 03.09.1996
(51) Int. Cl.: C08G 18/78, C08G 18/80, C09D 175/00, C07C 273/18

(54) **Bindemittelkombination zur Herstellung lösungsmittelfreier Beschichtungsmassen**
Binder combination for the preparation of solvent-free coating masses
Combinaison de liants pour la préparation de compositions de revêtement sans solvant

(30) Priorität: 15.09.1995 DE 19534162
(43) Veröffentlichungstag der Anmeldung: 23.04.1997
(73) Patentinhaber: BAYER AG, 51368 Leverkusen (DE)
(72) Erfinder: Brahm, Martin, Dr., 51373 Leverkusen (DE); Ruttmann, Gerhard, 51399 Burscheid (DE); Schmalstieg, Lutz, Dr., 50676 Köln (DE)

(56) Entgegenhaltungen:
- US-A- 3 769 318
- US-A- 3 832 311

## Beschreibung

Die Erfindung betrifft eine Bindemittelkombination zur Herstellung lösungsmittelfreier Beschichtungsmassen, bestehend im wesentlichen aus
a - einer Heteroallophanatgruppen enthaltenden Polyisocyanatkomponente und
b - einer lösungsmittelfreien Komponente mit isocyanatreaktiven Gruppen,
ihre Herstellung und Verwendung in 2K-Beschichtungsmaterialien.

Neben Epoxidsystemen werden im Bautenschutz speziell für hochwertige elastische Beschichtungen Bindemittelkombinationen aus Polyisocyanaten und isocyanatreaktiven Komponenten wie Polymerpolyolen eingesetzt. Gefordert sind hierbei Beschichtungen mit hoher Schichtstärke, was den Einsatz von lösungsmittelhaltigen Produkten weitgehend ausschließt.

Bindemittelkombinationen auf Basis lösungsmittelfreier aliphatischer Polyisocyanate weisen hierbei eine ausgezeichnete Vergilbungsstabilität auf. Gegenüber Polyisocyanaten mit aromatisch gebundenen Isocyanatgruppen zeigen sie jedoch eine langsame Aushärtung. Des weiteren werden hiermit zumeist Beschichtungen mit geringer Härte erhalten.

Aromatische Polyisocyanate zeigen in den Bindemittelkombinationen mit Polymerpolyolen eine rasche Aushärtung und Härteentwicklung. Jedoch ist nur mit speziellen hydrophoben Polyesterpolyolen eine blasenfreie Aushärtung in höheren Schichtstärken möglich.

Die geforderte niedrige Viskosität der Polyisocyanatkomponente läßt sich bei den bisher verwendeten aromatischen Systemen nur durch Verdünnung mit monomeren Diisocyanaten erfüllen. Aus toxikologischer Sicht kommen hierfür nur Produkte auf Basis Diisocyanatodiphenylmethan in Frage. Diese werden mit Polyolen auf Rizinusölbasis kombiniert als Beschichtungskombination eingesetzt. Aufgrund von unzureichender Verseifungsstabiliät kann diese Bindemittelkombination nicht direkt als 2K-System auf basische Untergründe appliziert werden. Die Anwendung bleibt auf Zwischenschichten und Deckschichten beschränkt.

Allophanatgruppen enthaltende Polyisocyanate auf Basis aliphatischer bzw. aromatischer Diisocyanate sind seit langem bekannt, z.B. GB-A-994 980, EP-A-303 150, EP-A-194, DE-A-2 009 179 und 2 040 645 sowie in der US-A-3 769 318.

Lösungsmittelfreie Bindemittelkombinationen, die auch in dicken Schichten schnell zu blasenfreien Beschichtungen mit gutem Härteniveau aushärten, sind jedoch in den genannten Offenlegungsschriften nicht beschrieben. Die in den aufgeführten Patentanmeldungen beanspruchten Polyisocyanate mit aromatisch gebundenen Isocyanatgruppen, auf Basis Homoallophanatgruppen enthaltender Verbindungen, sowie die aufgeführten aliphatischen Polyallophanate sind aufgrund der langsamen Aushärtung, zu hoher Eigenviskosität und zu hoher Blasenanfälligkeit in Bindemittelkombinationen mit Polyolen nicht geeignet.

Gesucht werden daher, insbesondere für die Betonversiegelung lösungsmittelfreie Bindemittelkombinationen, die auch in dicken Schichten schnell zu blasenfreien Beschichtungen mit gutem Härteniveau ausreagieren.

Diese Aufgabe konnte durch die erfindungsgemäßen Bindemittelkombination bestehend aus einer niedrigviskosen isocyanatreaktiven Komponente und lösungsmittelfreien Heteroallophanatgruppen enthaltenden aromatischen Polyisocyanaten gelöst werden.

Erfindungsgemäß sind unter "Heteroallophanatgruppen" enthaltenden Polyisocyanaten Produkte zu verstehen, deren überwiegender Anteil an Allophanatgruppen aus einer aliphatischen und einer aromatischen Isocyanatgruppe aufgebaut ist.

Unter "Homoallophanatgruppen" enthaltenden Polyisocyanaten sind dem gegenüber Verbindungen zu verstehen, deren Allophanatgruppen aus zwei aliphatischen oder zwei aromatischen Isocyanatgruppen entstanden sind.

Gegenstand der Erfindung sind daher im wesentlichen lösungsmittelfreie Bindemittelkombinationen bestehend aus
a) einer Polyisocyanatkomponente mit aromatisch gebundenen Isocyanatgruppen,
b) einer lösungsmittelfreien Komponente mit isocyanatreaktiven Gruppen und
c) gegebenenfalls weiteren Hilfsmitteln und Zusatzstoffen,
dadurch gekennzeichnet, daß die Komponente a) besteht aus Heteroallophanatgruppen enthaltenden Polyisocyanaten
i) eines NCO-Gehaltes von 3 bis 16 %,
ii) einer mittleren Funktionalität von 1,8 bis 4,
iii) eines Allophanatgruppengehaltes (berechnet als C₂HN₂O₃, MG: 101) von 5 bis 35 % und
iiii) eines Gehaltes an Kohlenwasserstoffketten (linear, verzweigt, gesättigt oder ungesättigt), die über ein Sauerstoffatom gebunden vorliegen, mit im Mittel von 2 bis 23 Kohlenstoffatomen von 10 bis 65 %.

Gegenstand der Erfindung ist auch die Herstellung sowie die Verwendung der Bindemittelkombinationen in bzw. als 2-Komponentenbeschichtungen.

In den erfindungsgemäßen Bindemittelkombinationen hat die Polyisocyanatkomponente a) einen
i) NCO-Gehalt von 3 bis 16, vorzugsweise 5 bis 13 und besonders bevorzugt 7 bis 10,5 %,
ii) eine mittlere Funktionalität von 1,8 bis 4, vorzugsweise 1,9 bis 3 und besonders bevorzugt von ca. 2,0,
iii) einen Allophanatgruppengehalt (berechnet als C₂HN₂O₃, Molekulargewicht MG: 101) von 5 bis 35 bevorzugt 10 bis 23 und
iiii) einen Gehalt an Kohlenwasserstoffketten, die über Sauerstoff an Allophanatgruppen gebunden vorliegen, mit im Mittel 2 bis 23 Kohlenstoffatomen von 10 bis 65 %, vorzugsweise 18 bis 53 % und besonders bevorzugt 30 bis 53 %.

Hierbei können die Kohlenwasserstoffketten linear, verzweigt, ungesättigt oder gesättigt sein. Vorzugsweise werden Kohlenwasserstoffketten mit im Mittel 8 bis 23 Kohlenstoffatomen und besonders bevorzugt mit im Mittel 16 bis 23 Kohlenstoffatomen eingesetzt.

Die Kohlenstoffatome der Kohlenwasserstoffkette können auch durch Sauerstoffatome getrennt vorliegen.

Hergestellt wird die in den erfindungsgemäßen Beschichtungskombinationen eingesetzte Polyisocyanatkomponente a) durch Reaktion einer linearaliphatischen Diisocyanatkomponente a1) mit einer Hydroxylkomponente a2) in einem NCO/OH-Verhältnis von 1,0 bis 0,5, vorzugsweise 1,0 bis 0,6 und besonders bevorzugt von 1,0.

Die Reaktion wird in einem Temperaturbereich von 40 bis 140 °C, vorzugsweise 60 bis 120 °C durchgeführt.

Die so entstandenen Urethangruppen enthaltenden Verbindungen bzw. Gemische weisen ein mittleres Molekulargewicht von 250 bis 4000, vorzugsweise 300 bis 2000 und besonders bevorzugt 300 bis 1000 g/mol auf.

Wird bei der Urethanisierung ein Überschuß an Hydroxylkomponente a2) eingesetzt, so verbleibt ein Teil der Hydroxylkomponente a2) im Reaktionsprodukt. In einer Verfahrensvariante kann dieser überschüssige Anteil (bzw. Teile hiervon) an Hydroxylkomponente a2) auch erst nach der Zugabe der Diisocyanatkomponente a3) zudosiert werden. Dieser Anteil reagiert im Anschluß mit der Diisocyanatkomponente a3) zum Urethan und weiter zum Allophanat.

Das aus a1) und a2) hergestellte Urethan kann auch aus dem der Isocyanatkomponente a1) zugrundeliegendem Amin über in der Literatur bekannte phosgenfreie Urethansynthesen hergestellt werden, wie sie beispielsweise in EP-A-27 940, EP-A-27 952, EP-A-27 953, EP-A-323 514 und EP-A-355 443 erwähnt sind. Dies ist jedoch weniger bevorzugt.

Die Reaktion der Urethankomponente aus a1) und a2) mit der Diisocyanatkomponente a3) erfolgt in einem NCO/Urethan-Äquivalentverhältnis von 3:1 bis 100:1 vorzugsweise von 6:1 bis 60:1 und besonders bevorzugt von 8:1 bis 30:1 in einem Temperaturbereich von 20°C bis 150°C, vorzugsweise 50°C bis 120°C und besonders bevorzugt 60°C bis 90°C, wobei vorzugsweise zur Beschleunigung der Allophanatisierungsreaktion übliche, Literatur bekannte Katalysatoren eingesetzt werden.

Beispiele für einsetzbare Katalysatoren sind Tetraalkylammoniumhydroxide bzw. Arylalkylammoniumhydroxide, Metallsalze wie Eisen-(III)-chlorid, Kaliumoctoat, Zinkverbindungen wie Zinkstearat, Zinkoctoat, Zinknaphthenat, Zinkacetylacetonat, Zinnverbindungen wie Zinn-(II)-octoat, Zinn-(II)-ethylhexanoat, Zinn-(II)-laurat, Aluminium-tri(ethlylacetoacetat), Dibutylzinnoxid, Dibutylzinndichlorid, Dibutylzinndiacetat, Dibutylzinndilaurat, Dibutylzinnmaleat oder Dioctylzinndiacetat, Mangan-, Cobalt- und Nickelverbindungen sowie Mineralsäuren wie Trifluoressigsäure, Schwefelsäure, Chlorwasserstoff, Bromwasserstoff, Phosphorsäure und Perchlorsäure und beliebige Gemische.

Bei der Reaktion von Urethangruppen mit aromatischen Isocyanatverbindungen können auch starke Säuren, wie in der EPA-194 beschrieben, eingesetzt werden. Dies ist jedoch weniger bevorzugt.

Die Katalysatoren können vor der Allophanatisierungsreaktion oder auch schon vor der Urethanisierung zugesetzt werden. Sie kommen in Konzentrationen von 0,001 % bis 5 %, vorzugsweise 0,005 % bis 1 % zum Einsatz. Der Katalysator kann, wenn möglich, destillativ aus dem Reaktionsansatz entfernt werden. Es kann jedoch auch sinnvoll sein, durch geeignete Katalysatorgifte (z.B. Wasser, Säurechloride) seine katalytische Wirkung zu stoppen.

Im Anschluß an die Allophanatisierungsreaktion wird das überschüssige, destillierbare Ausgangsdiisocyanat a3) vorzugsweise durch Dünnschichtdestillation bis auf einen Restgehalt im Verfahrensprodukt von unter 0,5, vorzugsweise unter 0,2 Gew.-% entfernt. Vorzugsweise Heteroallophanate mit aromatisch gebundenen Isocyanatgruppen der beschriebenen Art weisen eine ausreichende Thermostabilität auf, um bei der destillativen Abtrennung von Überschüssiger Komponente a3) nicht in starkem Maße in Urethan und Diisocyanat zurückzuspalten.

Als Diisocyanatkomponente a1) mit aliphatischen Isocyanatgruppen können linearaliphatische, verzweigte Diisocyanate mit einem NCO-Gehalt von 30 bis 60 %, vorzugsweise 40 bis 60 % eingesetzt werden. Beispielhaft genannt seien 1,4-Diisocyanatobutan, 1,5- Diisocyanatopentan, 1,6-Diisocyanatohexan (HDI), 2,2,4-und 2,4,4-Trimethyl-1,6-diisocyanatohexan, 1,11-Diisocyanatoundecan, Dodecamethylendiisocyanat sowie deren Gemische.

Zur Modifizierung können in geringem Umfang bis 20 mol% auch mono- und höherfunktionelle Isocyanatverbindungen wie Butylisocyanat, Stearylisocyanat und 2-Ethylhexylisocyanat Verwendung finden. Dies ist jedoch keineswegs bevorzugt.

Ganz besonders bevorzugt wird als Diisocyanatkomponente 1,6-Diisocyanatohexan oder 1,4-Diisocyanatobutan bzw. deren Gemische eingesetzt.

Als Alkoholkomponente a2) können Alkohole oder Mischungen von Alkoholen mit einer Kohlenwasserstoffkette von durchschnittlich 2 bis 23 vorzugsweise 8 bis 23 und besonders bevorzugt 16 bis 23 Kohlenstoffatomen, die linear, verzweigt, gesättigt und ungesättigt sein können, in Frage.

Die OH-Funktionalität der Alkoholkomponente liegt zwischen 1 und 1,5, vorzugsweise 1 und 1,2 und besonders bevorzugt bei 1.

Beispielhaft genannt seien Methanol, Ethanol, n-Propanol, iso-Propanol, Methoxypropanol, isomere Butanole, Pentanole, Hexanole, Heptanole, Octanole, Nonanole, Decanole, Dodecanole, Octadecanole, ^{R}Lorol-Typen, gesättigte Fettalkohole und Gemische.

In Abmischung mit monofunktionellen Alkoholen können auch höherfunktionelle Alkoholkomponenten mitverwendet werden. Beispiele hierfür sind Ethylenglykol, Propandiol-1,2 und -1,3, Butandiol-1,4 und 1,3, Hexandiol-1,6, Octandiol-1,8, Nonandiol-1,9, Decandiol-1,10, Dodecandiol-1,12, Octadecandiol-1,12, Neopentylglykol, 1,4-Bishydroxymethylcyclohexan, 2-Methyl-1,3-propandiol, 2,2,4-Trimethylpentandiol-1,3, 2-Ethyl-1,3-hexandiol, Diethylenglykol, Triethylenglykol, Tetraethylenglykol, Dipropylenglykol, Tripropylenglykol, Dimerfettalkohole, Trimerfettalkohole, Glycerin, Trimethylolpropan (TMP), Trimethylolethan, die isomeren Hexantriole, Polyether bis zu einem mittleren Molekulargewicht von 4000 g/mol sowie Mischungen.

Ebenfalls einsetzbar sind ungesättigte Alkohole wie Trimethylolpropandiallylether, isomere Butenole und monofunktionelle Alkohole, die sich von entsprechenden Säuren bzw. Säuregemischen aus ungesättigten synthetischen und natürlichen Fettsäuren ableiten. Natürliche vorkommende Fettsäuregemische sind beispielsweise die aus Rizinusöl, Erdnußölfett, Baumwollsaatöl, Safloröl, Holzöl, Sojaöl, Sonnenblumenöl, Leinöl, Rüböl, Talöl, Spermöl und Heringsöl abgeleiteten Säuren.

Neben derartigen ungesättigten monofunktionellen Alkoholen können als Alkoholkomponente a2) auch Umsetzungsprodukte aus oben erwähnten ungesättigten bzw. gesättigten Fettsäuren mit Epoxidverbindungen wie Ethylenoxid, Propylenoxid, Butylenoxid, Styroloxid und 2-Ethylhexyloxid Verwendung finden.

Schließlich können als Alkoholkomponente a2) auch Umesterungsprodukte aus Fettsäure basierten Triglyceriden mit höherwertigen Polyolen wie Glycerin, Trimethylolpropan, Pentaerytrit und Sorbit eingesetzt werden. Derartige Produkte enthalten dann neben nicht umgesetzten Triglyceriden ein-, zwei- und dreiwertige Alkoholkomponenten.

Die Kohlenwasserstoffkette kann gegebenenfalls durch Sauerstoffatome unterbrochen sein.

Als Diisocyanatkomponente a3) mit aromatisch gebundenen Isocyanatgruppen kommen Diisocyanate bzw. Mischungen mit einem NCO-Gehalt von 35 bis 53, vorzugsweise 40 bis 50 % in Betracht. Unter anderem zu nennen sind hier die Isomeren Toluylendiisocyanate, Naphthylendiisocyanate und Phenylendiisocyanate sowie Gemische.

Zur Erzielung eines speziellen Eigenschaftsniveaus können gegebenenfalls Monoisocyanate, wie beispielsweise Phenylisocyanat bzw. Triisocyanate bis zu einem Gehalt von 20 mol% einzusetzen.

Bevorzugt wird als Komponente a3) 2,4- oder 2,6-Toluylendiisocyanat bzw. deren Mischungen eingesetzt.

Die Komponente b) besteht aus mindestens einer Verbindung mit mindestens zwei gegenüber Isocyanatgruppen reaktionsfähigen Gruppen oder mindestens zwei hydrolytisch in derartige Gruppen überführbaren Gruppen. Gegebenenfalls ist die Verwendung von solchen Verbindungen, die sowohl freie als auch derartige reversibel blockierte, gegenüber Isocyanatgruppen reaktionsfähigen Gruppen aufweisen, möglich. Weiterhin möglich ist die Verwendung von unterschiedlichen derartigen Verbindungen, auch von solchen Gemischen, die sowohl Verbindungen mit freien als auch Verbindungen mit reversibel blockierten, gegenüber Isocyanatgruppen reaktionsfähigen Gruppen aufweisen.

Vorzugsweise weisen die Verbindungen der Komponente b) pro Molekül im Mittel 2 bis 6 freie oder blockierte, gegenüber Isocyanatgruppen reaktionsfähige Gruppen auf. Das Molekulargewicht der Komponente b) kann in einem weiten Bereich variieren. Vorzugsweise werden niedermolekulare Verbindungen, d. h. solche mit einem Molekulargewicht von ca. 100 bis 600 eingesetzt.

Die Menge der Komponente b) wird im übrigen so bemessen, daß in den Bindemitteln das Molverhältnis von Isocyanatgruppen der Komponente a) zu freien und/oder reversibel blockierten, gegenüber Isocyanatgruppen reaktionsfähigen Gruppen der Komponente b) bei 0,8:1 bis 10:1, vorzugsweise 0,9:1 bis 4:1, insbesondere 1:1 bis 2:1 und besonders bevorzugt 1:1 bis 1,2:1 liegt.

Als Komponente b) oder als Teil der Komponente b) kommen beispielsweise in Betracht:
- Polyoxazolidine der aus Polyurethanchemie an sich bekannten Art (z.B. DE-A-2 018 233, DE-A-2 446 438);
- Polyketimine oder Polyaldimine der aus der Polyurethanchemie an sich bekannten Art, (z.B. DE-A-1 520 139, DE-A-3 308 418);
- aromatische Polyamine, insbesondere Diamine mit sterisch gehinderten Aminogruppen (z.B. US-A-4 218 543) als Kettenverlängerungsmittel
und/oder
- mehrwertige Alkohole des Molekulargewichtsbereichs 62 bis 1000, vorzugsweise 62 bis 399, besonders bevorzugt 400 bis 1000.

Geeignete niedermolekulare Alkohole sind beispielsweise Ethylenglykol, Propylenglykol, Butandiol-1,4, Glycerin, Trimethylolpropan, Pentaerythrit, Diethylenglykol, Dipropylenglykol oder Gemische derartiger Polyole. Geeignete höhermolekulare Alkohole sind beispielsweise Polyhydroxyverbindungen wie Epoxidharze, Phenolharze, Alkydharze, Rizinusöl, Hydroxylgruppen aufweisende Polyesterharze, Silikonharze, Polyacrylate, Polyether, Polycarbonate und Mischtypen.

Zur Herstellung der Bindemittelkombination werden die Einzelkomponenten a) und b) und gegebenenfalls c) miteinander vermischt. Im Falle der Verwendung von Verbindungen b) mit reversibel blockierten gegenüber Isocyanatgruppen reaktiven Verbindungen, entstehen hierbei lagerstabile Beschichtungskombinationen, die in Abwesenheit von Feuchtigkeit lagerstabil sind und nach Applikation auf ein geeignetes Substrat in Gegenwart von Feuchtigkeit schnell aushärten. Erforderlichenfalls kann die Härtungsreaktion auch durch Zugabe von an sich bekannten Katalysatoren wie beispielsweise p-Toluolsulfonsäure, Dibutylzinnoctoat oder Zinkchlorid beschleunigt werden.

Im Falle der Verwendung von Reaktivkomponenten b), die freie gegenüber Isocyanatgruppen reaktionsfähige Gruppen, d.h. insbesondere Amino- oder Hydroxylgruppen aufweisen, hat die Bindemittelkombination nur eine begrenzte Topfzeit und sollte innerhalb dieser Zeit verarbeitet werden.

Im übrigen ist der hier verwendete Begriff "Bindemittelkombination" dahingehend zu verstehen, daß die erfindungsgemäßen Bindemittel aus den Einzelkomponenten a) und b) bestehen, wobei die Einzelkomponenten im Falle der Verwendung einer blockierten Einzelkomponente b) auch zu einem "Eintopf-System" vereinigt werden können.

Vorzugsweise werden als Komponente b) mit blockierten und/oder freien isocyanatreaktiven Gruppen hydroxyfunktionelle Polyether, Polyester, Polycarbonate und Polyacrylate bzw. Gemische sowie Mischtypen eingesetzt, wobei besonders bevorzugt Hydroxylgruppen enthaltende Polyether Verwendung finden.

Die erfindungsgemäße Bindemittelkombination aus Polyisocyanatkomponente a) und Komponente b) der beispielhaft genannten Art können als solche, d. h. ohne Mitverwendung von weiteren Hilfsmitteln und Zusatzstoffen c) als Beschichtungsmittel oder Dichtmassen verwendet werden. Vorzugsweise erfolgt ihr Einsatz jedoch in Kombination mit Hilfs- und Zusatzmitteln c) der an sich bekannten Art.

Als weitere Hilfsstoffe c) können in den erfindungsgemäßen Beschichtungsmaterialien beispielsweise die üblichen Weichmacher wie Trikresylphosphat, Phthalsäurediester oder Chlorparaffine, Benetzungsmittel, Verlaufsmittel, Hautverhinderungsmittel, Antischaummittel, Mattierungsmittel wie beispielsweise Kieselsäure, Aluminiumsilikate und hochsiedende Wachse, viskositätsregulierende Stoffe, Pigmente, Füllstoffe wie Titanoxid, Bariumsulfat, Kreide, Ruß, Farbstoffe, UV-Absorber, Stabilisatoren gegen thermischen bzw. oxidativen Abbau, eingesetzt werden.

Des weiteren können als Hilfsstoffe c) auch Katalysatoren wie N,N-Dimethylbenzylamin, N-Methylmorpholin, Dibutylzinndilaurat, DABCO (Diazabicyclooctan) sowie Sikkative eingesetzt werden. Derartige Sikkative sind beispielsweise in Ullmann, Enzyklopädie der technischen Chemie, 4. Auflage, Band 23 Seite 421 (Trockenstoffe) Verlag Chemie 1983, sowie in der DE-A-4 032 546 und darin zitierten Schriften aufgeführt. Als Beispiele seien Kobalt-, Blei-, Magnesium-, Zirkonium-, Aluminium-, Mangan-, Calcium-, Cer-, Kupfer-, Nickel-, Vanadium-, Barium- und Zinksikkative sowie Gemische genannt.

Die erfindungsgemäßen Bindemittel können in Beschichtungsmaterialien zur Beschichtung beliebiger Substrate wie beispielsweise Holz, Kunststoffe, Leder, Papier, Textilien, Glas, Keramik, Putz, Mauerwerk, Metalle oder Beton verwendet werden. Sie lassen sich mit üblichen Applikationsmethoden wie Spritzen, Streichen, Fluten, Gießen, Tauchen, Walzen aufbringen. Die Beschichtungsmittel können in Form von Klarlacken als auch in Form pigmentierter Lacke verwendet werden.

Die erfindungsgemäßen Beschichtungskombinationen zeichnen sich durch überraschend geringe Blasenanfälligkeit auch in dicken Beschichtungen aus. Vorteilhaft ist auch ihre direkte Verwendbarkeit auf basischen Untergründen, wie beispielsweise Beton.

Alle Angaben in "Teilen" und "%" beziehen sich auf das Gewicht.

### Beispiel 1 (Herstellung einer erfindungsgemäß einzusetzenden Polyisocyanatkomponente a))

In einer mit Stickstoff gespülten Rührapparatur werden 815,4 g (3,0 mol) HD-Ocenol 110/130 (Produkt der Henkel KGaA, OHZ: 200-220, Iodzahl: 110-130, ca. 95 % Kohlenwasserstoffketten mit 18 Kohlenstoffatomen) vorgelegt und bei 70°C mit 168 g (1,0 mol) 1,6-Hexamethylendiisocyanat versetzt. Nach ca. 3 Stunden Reaktionsdauer bei einer Temperatur von 90°C ist der NCO-Gehalt der entstandenen Urethankomponente auf unter 0,1 % gefallen. Nachfolgend wird durch Zugabe von 1740 g (10,0 mol) Toluylendiisocyanat (TDI, 2,4- zu 2,6-Isomerenverhältnis = 80:20) und anschließende Katalyse mit 140 mg Zinkstearat bei 88°C die Allophanatisierungsreaktion gestartet. Nach 9 Stunden wird die Reaktion durch Zugabe von 140 mg Isophthaloyldichlorid bei einem NCO-Gehalt von 24,2 % beendet. Das überschüssige Toluylendiisocyanat wird im Anschluß durch Dünnschichtdestillation im Hochvakuum (0,1 - 0,3 mbar) bei einer Temperatur von 150 °C abgetrennt.

| Produktdaten: | |
|---|---|
| Ausbeute | 1536 g |
| Viskosität | 3300 mPas/bei 23 °C |
| fr. TDI-Gehalt | 0,04 % |
| NCO-Gehalt (i) | 9,1 % |
| theo. Funktionalität (ii) | 2 |
| Gehalt an Allophanatgruppen (berechnet als C2HN2O3, MG: 101) (iii) | 20 % |
| Gehalt an Kohlenwasserstoffketten (iiii) | 50 % |

### Beispiel 2 (Herstellung einer erfindungsgemäß einzusetzenden Polyisocyanatkomponente a))

In einer mit Stickstoff gespülten Rührapparatur werden 271,8 g (1,0 mol) HD-Ocenol 110/130 (siehe Beispiel 1) vorgelegt und bei 90°C mit 84 g (0,5 mol) 1,4-Tetramethylendiisocyanat (BDI) versetzt. Nach ca. 8 Stunden Reaktionsdauer bei einer Temperatur von 95°C ist der NCO-Gehalt des entstandenen Diurethans auf unter 0,2 % gefallen. Nachfolgend wird durch Zugabe von 870 g (5,0 mol) TDI (siehe Beispiel 1) und anschließende Katalyse mit 60 mg Zinkstearat bei 88°C die Allophanatisierungsreaktion gestartet. Nach 5 Stunden ist ein NCO-Gehalt von 30,5 % erreicht und die Reaktion wird mit 120 mg Isophthaloyldichlorid abgestoppt. Das überschüssige TDI wird im Anschluß durch Dünnschichtdestillation im Hochvakuum (0,1 - 0,3 mbar) bei einer Temperatur von 150 °C abgetrennt.

| Produktdaten: | |
|---|---|
| Ausbeute | 488 g |
| Viskosität | 5000 mPas/bei 23 °C |
| fr. TDI-Gehalt | <0,03 % |
| NCO-Gehalt (i) | 7,9 % |
| theo. Funktionalität (ii) | 2 |
| Gehalt an Allophanatgruppen (berechnet als C2HN2O3, MG: 101) (iii) | 21 % |
| Gehalt an Kohlenwasserstoffketten (iiii) | 52 % |

### Beispiel 3 (Herstellung einer erfindungsgemäß einzusetzenden Polyisocyanatkomponente a))

In einer mit Stickstoff gespülten Rührapparatur werden 203,3 g (1,0 mol) tech. Lorol (Produkt der Henkel KGaA, OHZ: 265-275, Iodzahl: <0,5, Kohlenwasserstoffketten mit 12 bis 18 Kohlenstoffatomen) mit 500 g (0,125 mol) eines durch Propoxylierung von Propylenglykol und anschließende Ethoxylierung des Propoxylierungsproduktes hergestellten Polyethers (PO/EO-Mischverhältnis 79/21, OHZ: 28,5) vorgelegt und bei 70°C mit 105 g (0,625 mol) 1,6-Hexamethylendiisocyanat versetzt. Nach ca. 13 Stunden Reaktionsdauer bei einer Temperatur von 100°C ist der NCO-Gehalt des entstandenen Diurethans auf unter 0,2 % gefallen. Nachfolgend wird durch Zugabe von 652,5 g (3,75 mol) TDI (siehe Beispiel 1) und anschließende Katalyse mit 73 mg Zinkstearat bei 85°C die Allophanatisierungsreaktion gestartet. Nach 9 Stunden ist ein NCO-Gehalt von 17,3 % erreicht und die Reaktion wird mit 70 mg Isophthaloyldichlorid abgestoppt. Das überschüssige TDI wird im Anschluß durch Dünnschichtdestillation im Hochvakuum (0,1 - 0,3 mbar) bei einer Temperatur von 140 °C abgetrennt.

| Produktdaten: | |
|---|---|
| Ausbeute | 995 g |
| Viskosität | 7500 mPas/bei 23 °C |
| fr. TDI-Gehalt | <0,03 % |
| NCO-Gehalt (i) | 5,4 % |
| theo. Funktionalität (ii) | 2,5 |
| Gehalt an Allophanatgruppen (berechnet als C2HN2O3, MG: 101) (iii) | 13 % |
| Gehalt an Kohlenwasserstoffketten (iiii) | 19 % |

### Beispiele 4 und 5 (erfindungsgemäße Bindemittelkombination und nichterfindungsgemäßer Vergleichsversuch)

In einem Labordissolver werden die in Tabelle 1 aufgeführten Anteile an isocyanatreaktiver Komponente b) durch intensives Vermischen mit Trockenmittel und Entlüftungsmittel homogenisiert und nach Abkühlen auf Raumtemperatur mit der Polyisocyanatkomponente a) aus Beispiel 1 bzw. mit der nicht erfindungsgemäßen Polyisocyanatkomponente Desmodur E 21 gemischt und als Prüfkörper ausgegossen.

Im Vergleich zu der MDI-basierten Vergleichbindemittelkombination weist die erfindungsgemäße Bindemittelkombination trotz Katalyse eine verlängerte Topfzeit auf und läßt sich auch bei hoher Luftfeuchtigkeit zu blasenfreien dickschichtigen Beschichtungen aushärten. Mit der Vergleichsbindemittelkombination sind auch unter günstigen Bedingungen nur stark blasenversetzte Beschichtungen zugänglich.

**Tabelle 1:**

| Zusammensetzung der Bindemittelkombinationen | | |
|---|---|---|
| Desmophen 550 U (Propylenoxidpolyether auf Basis TMP, M: 440, Produkt der Bayer AG, Leverkusen) | 100 | 100 |
| Baylith C-Paste (Zeolith, Produkt der Bayer AG, Leverkusen) | 10 | 10 |
| Byk A 530 (Entlüftungsmittel, Produkt der Firma Byk-Chemie GmbH, Wesel) | 0,4 | 0,4 |
| Dibutylzinndilaurat (10 %ig in Desmophen 550 U) | 2,5 | -- |
| Polyisocyanat aus Beispiel 1 | 351 | |
| Polyisocyanat Desmodur E 21 (NCO: 16 %, Viskosität 6500mPas, lösungsmittelfreies MDI-Polyetherprepolymer der Bayer AG, Leverkusen) | | 182 |
| Verarbeitungszeit in Minuten | 40 | 25 |
| Shore D Härte (DIN 53505) | 51 | 54 |
| Härtung 20 °C, 30 % relative Luftfeuchtigkeit | blasenfrei | starke Blasenbildung |
| Härtung 30 °C, 80 % relative Luftfeuchtigkeit | blasenfrei | Schaumbildung |

## Patentansprüche

1. Im wesentlichen lösungsmittelfreie Bindemittelkombination bestehend aus
a) einer Polyisocyanatkomponente mit aromatisch gebundenen Isocyanatgruppen und
b) einer lösungsmittelfreien Komponente mit isocyanatreaktiven Gruppen sowie
c) gegebenenfalls weiteren Hilfsmitteln und Zusatzstoffen,
**dadurch gekennzeichnet, daß** die Komponente a) besteht aus Heteroallophanatgruppen enthaltenden Polyisocyanaten
i) eines NCO-Gehaltes von 3 bis 16 %,
ii) einer mittleren Funktionalität von 1,8 bis 4,
iii) eines Allophanatgruppengehaltes (berechnet als C₂HN₂O₃, MG: 101) von 5 bis 35 % und
iiii) eines Gehaltes an Kohlenwasserstoffketten (linear, verzweigt, gesättigt oder ungesättigt), die über Sauerstoff an Allophanatgruppen gebunden vorliegen, mit im Mittel 2 bis 23 Kohlenstoffatomen von 10 bis 65 %.

2. Bindemittelkombination nach Anspruch 1, **dadurch gekennzeichnet, daß** die Komponente a) besteht aus Heteroallophanatgruppen enthaltenden Polyisocyanaten
i) eines NCO-Gehaltes von 5 bis 13 %,
ii) einer mittleren Funktionalität von 1,9 bis 3,
iii) eines Allophanatgruppengehaltes (berechnet als C₂HN₂O₃, MG: 101) von 10 bis 23 % und
iiii) eines Gehaltes an Kohlenwasserstoffketten (linear, verzweigt, gesättigt oder ungesättigt), die über Sauerstoff an Allophanatgruppen gebunden vorliegen, mit im Mittel 8 bis 23 Kohlenstoffatomen von 18 bis 53 %.

3. Verfahren zur Herstellung der nach Anspruch 1 einzusetzenden Polyisocyanatkomponente a) **dadurch gekennzeichnet, daß** eine
a1) linearaliphatische Diisocyanatkomponente eines Isocyanatgruppengehaltes von 30 bis 60 % mit einer
a2) Hydroxylkomponente mit einer Kohlenwasserstoffkette von im Mittel 2 bis 23 Kohlenstoffatomen und einer mittleren Funktionalität von unter 1,5
in einem NCO/OH-Verhältnis von ca. 1 bis 0,5 zu einer Urethangruppen enthaltenden Verbindung umgesetzt wird und Allophanatbildung mit überschüssigen Mengen einer
a3) aromatischen Diisocyanatkomponente eines Isocyanatgruppengehaltes von 35 bis 53 %, wobei nach der Reaktion verbleibende Diisocyanatkomponente a3) bis auf einen Gehalt von unter 0,5 % entfernt wird.

4. Verfahren zur Herstellung nach Anspruch 1 **dadurch gekennzeichnet, daß** als Diisocyanatkomponente a3) 2,4- oder 2,6-Toluylendiisocyanat bzw. deren Mischungen eingesetzt wird.

5. Verwendung der Bindemittelkombination nach Anspruch 1 als bzw. in 2K-Beschichtungsmaterialien.

6. Verwendung der Bindemittelkombinationen nach Anspruch 1 als feuchtigkeitshärtendes, einkomponentig zu verarbeitendes Beschichtungssystem.

## Claims

1. A substantially solvent-free binder combination consisting of
a) a polyisocyanate component with aromatically attached isocyanate groups and
b) a solvent-free component with isocyanate-reactive groups,
c) optionally together with further auxiliary substances and additives,
**characterised in that** component a) consists of polyisocyanates containing heteroallophanate groups, which polyisocyanates have
i) an NCO content of 3 to 16%,
ii) an average functionality of 1.8 to 4,
iii) an allophanate group content (calculated as C₂HN₂O₃, MW: 101) of 5 to 35% and
iiii) a content of hydrocarbon chains (linear, branched, saturated or unsaturated), which are present attached to allophanate groups via oxygen, having an average of 2 to 23 carbon atoms, of 10 to 65%.

2. A binder combination according to claim 1, **characterised in that** component a) consists of polyisocyanates containing heteroallophanate groups and having
i) an NCO content of 5 to 13%,
ii) an average functionality of 1.9 to 3,
iii) an allophanate group content (calculated as C₂HN₂O₃, MW: 101) of 10 to 23% and
iiii) a content of hydrocarbon chains (linear, branched, saturated or unsaturated), which are present attached to allophanate groups via oxygen, having an average of 8 to 23 carbon atoms, of 18 to 53%.

3. A process for the production of the polyisocyanate component a) to be used according to claim 1, **characterised in that**
a1) a linear aliphatic diisocyanate component of an isocyanate group content of 30 to 60% is reacted with
a2) a hydroxyl component with a hydrocarbon chain of on average 2 to 23 carbon atoms and an average functionality of below 1.5
in an NCO/OH ratio of approximately 1 to 0.5 to yield a compound containing urethane groups and allophanate formation with excess quantities of
a3) an aromatic diisocyanate component of an isocyanate group content of 35 to 53%, wherein the diisocyanate component a3) remaining after the reaction is removed down to a content of below 0.5%.

4. A process for production according to claim 1, **characterised in that** 2,4- or 2,6-tolylene diisocyanate or mixtures thereof are used as the diisocyanate component a3).

5. Use of the binder combination according to claim 1 as or in two component coating materials.

6. Use of the binder combinations according to claim 1 as a moisture curing coating system to be applied as a single component.

## Revendications

1. Liant combiné essentiellement sans solvant, consistant en
a) un composant polyisocyanate à groupes isocyanate à liaisons aromatiques et,
b) un composant à groupes réactifs avec les isocyanates, sans solvant, et
c) le cas échéant d'autres produits auxiliaires et additifs,
**caractérisé en ce que** le composant a) consiste en polyisocyanates contenant des groupes hétéroallophanate
i) à une teneur en NCO de 3 à 16 %,
ii) à une fonctionnalité moyenne de 1,8 à 4,
iii) à une teneur en groupes allophanate (exprimé en C₂HN₂O₃, PM : 101) de 5 à 35 % et
iiii) à une teneur de 10 à 65 % en chaînes hydrocarbonées (linéaires, ramifiées, saturées ou insaturées) reliées aux groupes allophanate par l'intermédiaire de l'oxygène, et contenant en moyenne 2 à 23 atomes de carbone.

2. Liant combiné selon revendication 1, **caractérisé en ce que** le composant a) consiste en polyisocyanates à groupes hétéroallophanate
i) à une teneur en NCO de 5 à 13 %,
ii) à une fonctionnalité moyenne de 1,9 à 3,
iii) à une teneur en groupes allophanate (exprimé en C₂HN₂O₃, PM : 101) de 10 à 23 %, et
iiii) à une teneur de 18 à 53 % en chaînes hydrocarbonées (linaires, ramifiées, saturées ou insaturées) reliées aux groupes allophanate par l'intermédiaire de l'oxygène et contenant en moyenne 8 à 23 atomes de carbone.

3. Procédé pour la préparation du composant polyisocyanate a) à utiliser selon revendication 1, **caractérisé en ce que** l'on fait réagir à un rapport NCO/OH d'environ 1 à 0,5,
a1) un composant diisocyanate aliphatique linéaire à une teneur en groupes isocyanate de 30 à 60 % avec
a2) un composant hydroxylé à chaînes carbonées de 2 à 23 atomes de carbone en moyenne et fonctionnalité moyenne inférieure à 1,5,
avec formation d'un composé contenant des groupes uréthane, et formation d'allophanate par réaction avec un excès de
a3) un composant diisocyanate aromatique à une teneur en groupes isocyanate de 35 à 53 %,
le composant diisocyanate a3) restant après la réaction étant ensuite éliminé jusqu'à une teneur résiduelle inférieure à 0,5 %.

4. Procédé de préparation selon revendication 1, **caractérisé en ce que** l'on utilise en tant que composant diisocyanate a3) le 2,4- ou le 2,6-toluylènediisocyanate ou un mélange de ces diisocyanates.

5. Utilisation du liant combiné selon revendication 1 en tant que produit de revêtement ou dans des produits de revêtement à deux composants.

6. Utilisation du liant combiné selon revendication 1 en tant que produit de revêtement à appliquer en un seul composant et durcissant sous l'action de l'humidité.
